# EUROPEAN PATENT SPECIFICATION

(11) **EP 2 709 073 B1**
(45) Date of publication and mention of the grant of the patent: **17.06.2020**
(21) Application number: 13003750.0
(22) Date of filing: 26.07.2013
(51) Int. Cl.: G06F 21/55, G07C 5/08

(54) **Electronic control unit of vehicle**
Elektronische Steuereinheit eines Fahrzeugs
Unité de commande électronique de véhicule

(30) Priority: 12.09.2012 JP 2012200316
(43) Date of publication of application: 19.03.2014
(73) Proprietor: Keihin Corporation, Tokyo 163-0539 (JP)
(72) Inventor: Kanno, Satoru, Tochigi, 3291233 (JP); Watanabe, Hideki, Tochigi, 3291233 (JP); Hanatsuka, Takako, Tochigi, 3291233 (JP)
(74) Representative: Hertz, Oliver

(56) References cited:
- EP-A1- 1 804 144
- US-A1- 2001 005 804
- US-A1- 2003 055 552
- US-A1- 2004 199 783
- US-A1- 2009 240 394

## Description

### BACKGROUND OF THE INVENTION

The present invention relates to an electronic control unit, and more particularly relates to an electronic control unit of a vehicle that records an update history of control data for vehicle-mounted devices.

On vehicles such as automobiles, an electronic control unit (ECU) that controls a vehicle-mounted device such an engine is mounted (see e.g. US 2001/005804 A1, US 2004/199783 A1, or US 2009/240394 A1). In the electronic control unit, control data to be used for control of the engine and the like is stored beforehand in a so-called "flash ROM (Read Only Memory)". The control data includes a control program and a control value, and the control program is executed by a CPU (Central Processing Unit) in the electronic control unit and the control value is used for the computation by the CPU, thereby controlling the engine and the like. Further, when there is a specification change or the like in the control program, the storage contents in the flash ROM may be rewritten by a manufacturer or a store of the vehicle.

In this manner, the storage contents in the flash ROM of the electronic control unit may be rewritten by an access from outside. The electronic control unit may have such a configuration that when the control data is rewritten, the rewrite history is stored.

For example, in a four-wheels vehicle, a separate electronic control unit, for instance, a control unit of a navigation device is mounted in addition to the electronic control unit that controls the engine and the like, and a configuration in which when the control data of the electronic control unit is rewritten, change history information thereof is written in the separate electronic control unit has been adopted. Further, the change history information includes received date and time of the control data for update, the electronic control unit to be updated, version information of the control data for update, and update completion date and time (see Japanese Patent Application Laid-open Publication No. 2011-894).

In this way, by recording the update history information in the separate electronic control unit, for example, the store of the vehicle can confirm whether the control data has been rewritten by a user or the like of the vehicle. Further, the manufacturer of the vehicle can confirm the control data, which has been rewritten and used in a vehicle test or the like, or confirm whether there is any incomplete update of the control data to be updated.

### SUMMARY OF THE INVENTION

However, according to the studies by the present inventors, when a vehicle on which the electronic control unit is mounted, is a small vehicle such as a motorcycle, it is difficult to mount the separate electronic control unit in view of space savings and cost reductions. That is, in such a case, it has been difficult to manage the data update history.

The present invention has been achieved to solve the above problems, and an object of the present invention is to record an update history of control data reliably, while achieving space savings. This object is solved with a system comprising the features of claim 1. Preferred embodiments of the invention are defined in the dependent claims.

According to the present invention, by creating a unique code that is in one-to-one correspondence to corresponding control data, it is possible to confirm an update history of the data without creating the update history in another electronic control unit.

### BRIEF DESCRIPTION OF THE DRAWINGS

FIG. 1 is a block diagram of a schematic configuration of a data update system including an electronic control unit according to an embodiment of the present invention; and
FIG. 2 is an explanatory diagram of a case where there is an access from a user in the data update system including the electronic control unit according to the present embodiment.

### DETAILED DESCRIPTION OF THE PREFERRED EMBODIMENT

A data update system according to an embodiment of the present invention is explained below in detail with reference to the accompanying drawings.

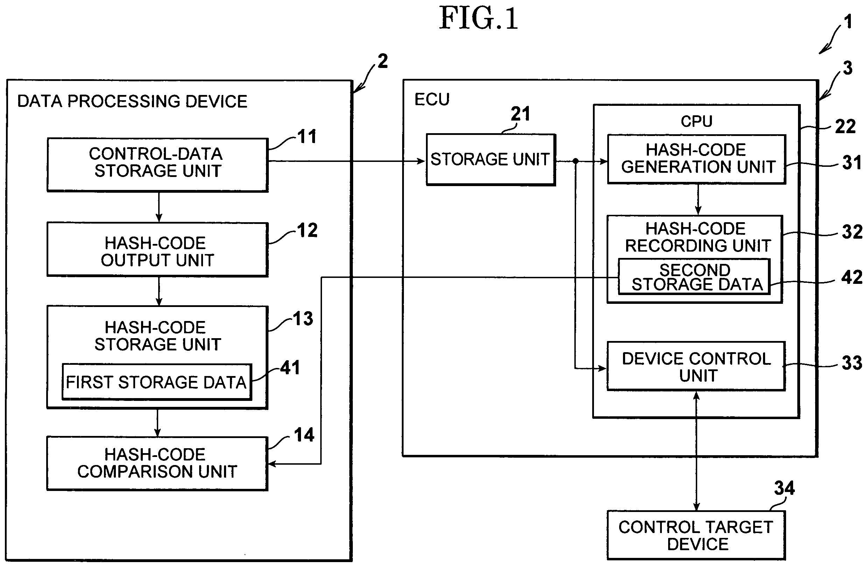

FIG. 1 shows a schematic configuration of a data update system including an electronic control unit of a vehicle.

As shown in FIG. 1, a data update system 1 includes a data processing device 2 to be used by a manufacturer of a vehicle, and an electronic control unit 3 mounted on the vehicle. The data processing device 2 can be provided at a store or the like.

The data processing device 2 can be functionally divided into a control-data storage unit 11 that records control data including a control program and a control value, a hash-code output unit 12 that creates a hash code including unique data defining the control data, a hash-code storage unit 13 that stores therein the hash code, and a hash-code comparison unit 14 that compares a plurality of hash codes.

A writable/readable memory is used for the control-data storage unit 11 and the hash-code storage unit 13. The hash-code output unit 12 uses a so-called "hash algorithm", for example, a hash algorithm that creates a hash code including integer values and alphabets from a binary code, and the hash code is a unique code that is in one-to-one correspondence to the corresponding control data. The hash-code comparison unit 14 compares first storage data 41 including a hash code stored at the manufacturer side with data of a hash code stored in the electronic control unit of the vehicle, to judge whether the both hash codes match with each other.

The electronic control unit 3 of the vehicle includes a storage unit 21 and a CPU 22. A flash ROM is used for the storage unit 21 to store therein control data required for controlling the vehicle such as a control program and a control value. The CPU 22 can be functionally divided into a hash-code generation unit 31 that generates a hash code, a hash-code recording unit 32 that records the hash code as second storage data 42, and a device control unit 33. The device control unit 33 generates a signal or the like that controls a control target device 34 such as an electric component and an engine by using the control data stored in the storage unit 21.

A process at the time of updating the data is explained next by using a case where the control program stored in the storage unit 21 of the electronic control unit 3 is updated as an example. The same process is performed with respect to the control value.

First, the data processing device 2 in the manufacturer and the electronic control unit 3 are connected so that data communication becomes possible. A binary code of the control program for update is then transmitted from the control-data storage unit 11 of the data processing device 2 to the storage unit 21 of the electronic control unit 3.

At this time, the control-data storage unit 11 transfers the same binary code as that of the control program transmitted to the electronic control unit 3 to the hash-code output unit 12 of the data processing device 2. The hash-code output unit 12 creates a hash code from the binary code of the control program by using the hash algorithm prepared beforehand. A data amount of the hash code is much smaller than that of the control program, and the hash code is uniquely created with respect to the control program. The hash code created in this manner is stored in the hash-code storage unit 13 as the first storage data 41. When there is a hash code already stored therein, the hash-code storage unit 13 adds the new hash code to after the existing hash code without replacing the existing hash code by the new hash code, to create and store the first storage data 41.

For example, when data write has been performed twice with respect to the electronic control unit 3 before data update this time, the hash-code storage unit 13 has already stored and includes two hash codes in the first storage data 41 before update in order of write. The two existing hash codes are assumed here as "5ec8eee62e66457b" and "41f2d2da5d83ecf6", for example. When the hash-code output unit 12 creates a new hash code "7aa0371ff93d0144" in association with data update this time, this new hash code is added after the two existing hash codes, and these three hash codes are stored as the first storage data 41.

That is, the contents of the first storage data 41 are arranged in the following order and stored by the update process this time.
"5ec8eee62e66457b"
"41f2d2da5d83ecf6"
"7aa0371ff93d0144"

Accordingly, when the contents of the first storage data 41 are checked, it is understood that data write with respect to the electronic control unit 3 has been performed three times, and the data corresponding to the hash code "5ec8eee62e66457b" has been written in the electronic control unit 3 in the first process. Similarly, it is understood that the pieces of data corresponding to "41f2d2da5d83ecf6" and "7aa0371ff93d0144" have been written in the electronic control unit 3 in the second process and the third process.

Meanwhile, the electronic control unit 3 of a vehicle rewrites the control program stored in the storage unit 21 to the control program newly transmitted from the data processing device 2. Thereafter, the device control unit 33 controls the control target device 34 by using the updated new control program. The storage unit 21 transmits a binary code of the new control program to the hash-code generation unit 31 of the CPU 22. The hash-code generation unit 31 creates a hash code from the binary code of the new control program by using the hash algorithm same as the hash algorithm used by the hash-code output unit 12 of the data processing device 2. The created hash code is stored in the hash-code recording unit 32 as the second storage data 42. When there is a hash code already stored, the hash-code recording unit 32 adds the new hash code after the existing hash code without replacing the existing hash code by the new hash code, to create and store the second storage data 42.

The hash-code output unit 12 in the manufacturer and the hash-code generation unit 31 on a vehicle use the same hash algorithm as described above. Accordingly, the first storage data 41 stored in the hash-code storage unit 13 in the manufacturer and the second storage data 42 stored in the hash-code recording unit 32 on a vehicle have the same contents if there is no falsification or the like. Because new hash codes are sequentially added and stored, the number of hash codes to be stored and an arrangement order are the same. Accordingly, if the electronic control unit 3 is appropriately used, the first storage data 41 and the second storage data 42 are the same. That is, when the hash-code comparison unit 14 compares the two pieces of storage data 41 and 42 with each other, the both pieces of data match with each other.

On the other hand, there is explained a case where rewrite, which is not intended by a manufacturer or a dealer, is performed to data of the electronic control unit 3.

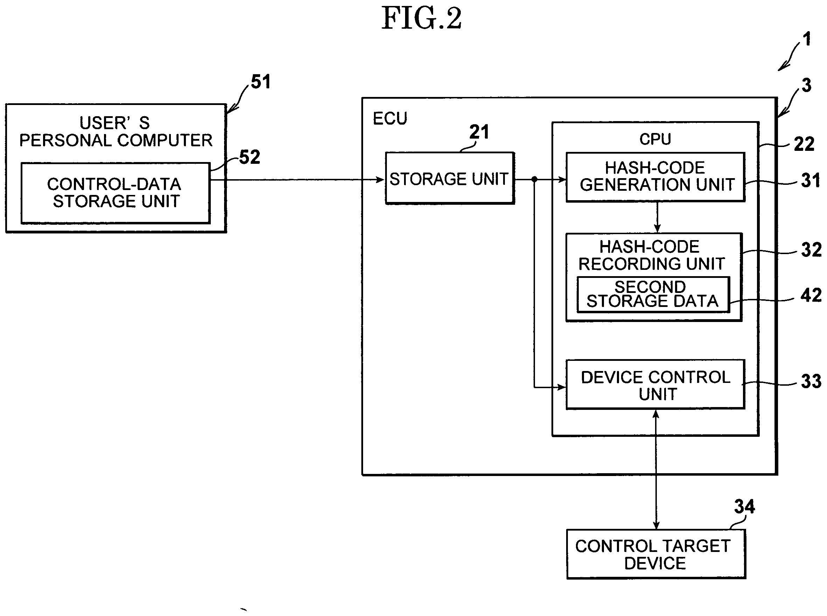

FIG. 2 is an explanatory diagram of a case where there is an access from a user in the data update system including the electronic control unit according to the present embodiment.

For example, as shown in FIG. 2, when a user of a vehicle connects a personal computer 51 to the electronic control unit 3 on the vehicle to write uniquely created data required for controlling the vehicle, for example, a control program in the storage unit 21 of the electronic control unit 3 from a control-data storage unit 52, the control program in the storage unit 21 of the electronic control unit 3 is rewritten by the control program input from the user.

At this time, the hash-code generation unit 31 of the electronic control unit 3 generates a hash code with respect to the control program written by the user, such as "92c747f65707143b". Because the control program written by the user is different from the qualified control program, the values of the hash codes are different from each other. The hash-code recording unit 32 creates and stores therein the second storage data 42 added with the hash code "92c747f65707143b" corresponding to the control program written illegally.

Thereafter, as shown in FIG. 1, when the data processing device 2 of the manufacturer is connected to the electronic control unit 3, and the hash-code comparison unit 14 checks whether the first storage data 41 stored in the hash-code storage unit 13 matches with the second storage data 42 stored in the hash-code recording unit 32 of the electronic control unit 3 on the vehicle. When the control program is rewritten by the user, the number of hash codes included in the second storage data 42 in the hash-code recording unit 32 increases by the number of rewrite.

For example, a case where data is rewritten by the user between the second and third rewrites is specifically explained. At this time, the first storage data 41 in the data processing device 2 at the manufacturer side is arranged, for example, in the following order and stored.
"5ec8eee62e66457b"
"41f2d2da5d83ecf6"
"7aa0371ff93d0144"

On the other hand, the second storage data 42 in the electronic control unit 3 is arranged, for example, in the following order and stored.
"5ec8eee62e66457b"
"41f2d2da5d83ecf6"
"92c747f65707143b"
"7aa0371ff93d0144"

The first storage data 41 stored at the manufacturer side has three hash codes. On the other hand, the second storage data 42 in the electronic control unit 3 has four hash codes. The second storage data 42 includes one extra hash code having different contents. Therefore, the hash-code comparison unit 14 judges that the pieces of storage data do not match with each other, that is, rewrite that is not intended by the manufacturer has been performed. It is understood from the arrangement of the hash codes that the data is rewritten by the user in a period from the second rewrite of data to the third write of data.

As described above, in the present embodiment, when the data is written from outside, unique data defining the data, for example, a hash code is created and stored. Because the data amount of the hash code is sufficiently smaller than the original control data, even in a small memory mounted on the electronic control unit 3, the update history can be stored. Because the pieces of storage data 41 and 42 are not overwritten every time data is written, but a new hash code is added to the existing data, the presence of data update, which is not intended by a manufacturer or a dealer, can be easily confirmed by checking the contents of the pieces of storage data 41 and 42. Because a separate control unit that stores therein the update history does not need to be provided, the device configuration can be simplified and downsized, thereby enabling to realize cost reductions.

Further, in the present embodiment, because the existing hash code is not deleted but a new hash code is added in the storage data 41 and 42, even if the control data rewritten once is restored to the original data afterwards, occurrence of unintended rewrite can be confirmed. For example, in the example above, after the control data corresponding to "92c747f65707143b" is written, when the control data is restored to the original data again, the second storage data 42 is arranged, for example, in the following order and stored.
"5ec8eee62e66457b"
"41f2d2da5d83ecf6"
"92c747f65707143b"
"41f2d2da5d83ecf6"
"7aa0371ff93d0144"

That is, because there is the hash code, which essentially does not exist, on the third and fourth lines, the update history can be reliably ascertained.

Further, in the present embodiment, because the hash codes are added to the storage data 41 and 42 in chronological order, the timing at which unintended rewrite has been performed can be confirmed. In the example above, it is easily confirmed that unintended rewrite has been performed after data update corresponding to "41f2d2da5d83ecf6" and before data update corresponding to "7aa0371ff93d0144".

The present invention is not limited to the above embodiment, and can be widely applied.

The storage data 41 and 42 can have a configuration in which information specifying the vehicle is associated with the hash code or rewrite time of data is associated with the hash code. When the information specifying the vehicle is associated with the hash code, the data processing device 2 can reliably check a plurality of vehicle types and the update history of vehicles.

## Claims

1. A system comprising an electronic control unit of a vehicle (3) and a data processing device (2), the electronic control unit (3) comprising:
a storage unit (21) adapted to store therein control data of a control target device mounted on a vehicle, the electronic control unit being adapted to rewrite the control data stored therein to a control data transmitted from the data processing device (2) outside the vehicle; and
a central processing unit (22) having:
a hash code generation unit (31) adapted to generate a unique code corresponding to the control data that is rewritten, when the control data stored in the storage unit (21) is rewritten;
a hash code recording unit (32) adapted to record the generated hash code therein by adding the generated hash code to codes already recorded therein, when the code is newly generated; and
a device control unit (33) adapted to generate a signal to control the control target device by using the rewritten control data stored in the storage unit;
the data processing device comprising a control-data storage unit (11), a hash-code output unit (12), a hash-code storage unit (13) and a hash-code comparison unit (14), the data processing device being configured to transmit a control program update from the control-data storage unit (11) to the storage unit (21) of the electronic control unit (3), the hash-code output unit (12) being adapted to generate a hash code from the control program transmitted to the electronic control unit (3), the hash-code storage unit (13) being adapted to store the generated hash-code after existing hash-codes without replacing the existing hash-codes, and the hash-code comparison unit (14) being configured to compare the data stored in the hash-code storage unit (13) and the hash code stored in the hash-code recording unit (32).

2. The system according to claim 1,
wherein the code recording unit (32) is configured to arrange and store therein the codes in order of the control data being updated.

3. The system according to claim 1 or 2, wherein the control target device is an engine of the vehicle.

## Patentansprüche

1. System, das eine elektronische Steuereinheit eines Fahrzeugs (3) und eine Datenverarbeitungsvorrichtung (2) umfasst, wobei die elektronische Steuereinheit (3) umfasst:
eine Speichereinheit (21), die angepasst ist, darin Steuerdaten einer an einem Fahrzeug angebrachten Steuertargeteinrichtung zu speichern, wobei die elektronische Steuereinheit angepasst ist, die darin gespeicherten Steuerdaten in Steuerdaten umzuschreiben, die von der Datenverarbeitungsvorrichtung (2) außerhalb des Fahrzeugs übertragen werden; und
eine zentrale Verarbeitungseinheit (22) die aufweist:
eine Hash-Code-Erzeugungseinheit (31), die angepasst ist, einen eindeutigen Code zu erzeugen, der den Steuerdaten entspricht, die umgeschrieben werden, wenn die in der Speichereinheit (21) gespeicherten Steuerdaten umgeschrieben werden;
eine Hash-Code-Aufzeichnungseinheit (32), die angepasst ist, den erzeugten Hash-Code darin aufzuzeichnen, indem der erzeugte Hash-Code zu bereits darin aufgezeichneten Codes hinzufügt wird, wenn der Code neu erzeugt wird; und
eine Gerätesteuereinheit (33), die angepasst ist, ein Signal zur Steuerung der Steuertargeteinrichtung unter Verwendung der in der Speichereinheit gespeicherten umschriebenen Steuerdaten zu erzeugen;
wobei die Datenverarbeitungsvorrichtung eine Steuerdaten-Speichereinheit (11), eine Hash-Code-Ausgabeeinheit (12), eine Hash-Code-Speichereinheit (13) und eine Hash-Code-Vergleichseinheit (14) umfasst, wobei die Datenverarbeitungsvorrichtung konfiguriert ist, eine Steuerprogrammaktualisierung von der Steuerdaten-Speichereinheit (11) an die Speichereinheit (21) der elektronischen Steuereinheit (3) zu übertragen, wobei die Hash-Code-Ausgabeeinheit (12) angepasst ist, einen Hash-Code aus dem an die elektronische Steuereinheit (3) übertragenen Steuerprogramm zu erzeugen, wobei die Hash-Code-Speichereinheit (13) angepasst ist, den erzeugten Hash-Code nach vorhandenen Hash-Codes zu speichern, ohne die vorhandenen Hash-Codes zu ersetzen, und wobei die Hash-Code-Vergleichseinheit (14) konfiguriert ist, die in der Hash-Code-Speichereinheit (13) gespeicherten Daten und den in der Hash-Code-Aufzeichnungseinheit (32) gespeicherten Hash-Code zu vergleichen.

2. System gemäß Anspruch 1,
wobei die Codeaufzeichnungseinheit (32) konfiguriert ist, die Codes in der Reihenfolge, in der die Steuerdaten aktualisiert werden, darin anzuordnen und zu speichern.

3. System gemäß Anspruch 1 oder 2, wobei die Steuertargeteinrichtung ein Motor des Fahrzeugs ist.

## Revendications

1. Système comprenant une unité de commande électronique d'un véhicule (3) et un dispositif de traitement de données (2), l'unité de commande électronique (3) comprenant :
une unité de stockage (21) adaptée pour stocker dans celle-ci des données de commande d'un dispositif cible de commande monté sur un véhicule, l'unité de commande électronique étant adaptée pour réécrire les données de commande qui sont stockées dans celle-ci en données de commande transmises à partir du dispositif de traitement de données (2) à l'extérieur du véhicule ; et
une unité centrale de traitement (22) ayant :
une unité de génération de code de hachage (31) adaptée pour générer un code unique correspondant aux données de commande qui sont réécrites, lorsque les données de commande stockées dans l'unité de stockage (21) sont réécrites ;
une unité d'enregistrement de codes de hachage (32) adaptée pour enregistrer le code de hachage généré dans celle-ci en ajoutant le code de hachage généré à des codes déjà enregistrés dans celle-ci, lorsque le code est récemment généré ; et
une unité de commande de dispositif (33) adaptée pour générer un signal pour commander le dispositif cible de commande en utilisant les données de commande réécrites stockées dans l'unité de stockage ;
le dispositif de traitement de données comprenant une unité de stockage de données de commande (11), une unité de sortie de codes de hachage (12), une unité de stockage de codes de hachage (13) et une unité de comparaison de codes de hachage (14), le dispositif de traitement de données étant configuré pour transmettre une mise à jour de programme de commande de l'unité de stockage de données de commande (11) à l'unité de stockage (21) de l'unité de commande électronique (3), l'unité de sortie de codes de hachage (12) étant adaptée pour générer un code de hachage à partir du programme de commande transmis à l'unité de commande électronique (3), l'unité de stockage de codes de hachage (13) étant adaptée pour stocker le code de hachage généré après des codes de hachage existants, sans remplacer les codes de hachage existants, et l'unité de comparaison de codes de hachage (14) étant configurée pour comparer les données stockées dans l'unité de stockage de codes de hachage (13) et le code de hachage stocké dans l'unité d'enregistrement de codes de hachage (32).

2. Système selon la revendication 1,
dans lequel l'unité d'enregistrement de codes (32) est configurée pour agencer et stocker dans celle-ci les codes dans l'ordre de la mise à jour des données de commande.

3. Système selon la revendication 1 ou 2, dans lequel le dispositif cible de commande est un moteur du véhicule.
